# EUROPÄISCHE PATENTANMELDUNG

(11) **EP 0 707 818 A1**
(43) Veröffentlichungstag der Anmeldung: **24.04.1996**
(21) Anmeldenummer: 95108360.9
(22) Anmeldetag: 01.06.1995
(51) Int. Cl.: A47C 7/54, A47C 1/023, B60N 2/46

(54) **Befestigungsvorrichtung fär eine Armlehne**

(30) Priorität: 19.10.1994 DE 4437393
(71) Anmelder: WILHELM LINK GmbH & Co. KG Stahlrohrmöbel, D-72469 Messstetten (DE)
(72) Erfinder: Merz, Dieter, D-72469 Messstetten (DE)
(74) Vertreter: Möbus, Daniela

(57) **Zusammenfassung**

Eine Befestigungsvorrichtung für eine Armlehne an einem Stuhl, wobei Armlehne und Stuhl über mindestens einen Konus (13.1, 14.1, 19.1, 20.1) und mindestens eine sich konisch verengende Öffnung (25, 26, 27, 28) miteinander verbindbar sind, indem mit einem Spannbügel (23) der mindestens eine Konus (13.1, 14.1, 19.1, 20.1) in die mindestens eine sich konisch verengende Öffnung (25, 26, 27, 28) eingepreßt wird.

## Beschreibung

Die Erfindung betrifft eine Befestigungsvorrichtung für eine Armlehne an einem Stuhl, insbesondere einem Arbeitsstuhl.

Armlehnen für Büro- oder Arbeitsstühle sind meistens aus einem Kunststoffmaterial gefertigt und weisen an ihrer Unterseite eine Anschraubplatte auf, die meistens als Stahlplatte ausgeführt ist. Mit mehreren Schrauben wird diese Anschraubplatte an der Unterseite der Sitzfläche des Stuhls befestigt und damit die Armlehne am Stuhl verankert.

Durch den heutzutage weitverbreiteten modularen Aufbau von Büro- und Arbeitsstühlen kann ein Stuhl, der mit Armlehne hergestellt und vertrieben worden ist, auch als Stuhl ohne Armlehne verwendet werden. Der Nutzer des Stuhls hat also die Möglichkeit, Armlehnen an- und abzuschrauben oder von einem Stuhl auf einen anderen Stuhl zu übertragen. Das An- und Abschrauben der Armlehnen ist aber relativ arbeitsaufwendig und nur mit Hilfe eines Werkzeugs durchzuführen.

Der Erfindung liegt daher die Aufgabe zugrunde, eine Befestigungsvorrichtung für eine Armlehne an einem Stuhl, insbesondere einem Arbeitsstuhl, so auszubilden, daß die Armlehne schnell und einfach an einen Stuhl anbringbar und wieder entfernbar ist.

Gelöst wird die Aufgabe mit einer gattungsgemäßen Befestigungsvorrichtung dadurch, daß Armlehne und Stuhl über mindestens einen Konus und eine sich konisch verengende Öffnung miteinander verbindbar sind, indem mit einem Spannbügel der mindestens eine Konus in die mindestens eine sich konisch verengende Öffnung eingepreßt wird.

Die erfindungsgemäße Befestigungsvorrichtung hat den Vorteil, daß auch handwerklich ungeübte Personen mit einem einfachen Handgriff die Armlehne vom Stuhl entfernen oder an einem Stuhl anbringen können. Bisher war es noch üblich, zum Beispiel einen Stuhl ohne Armlehnen gegen einen Stuhl mit Armlehnen auszutauschen. Bei einem Stuhl mit der erfindungsgemäßen Befestigungsvorrichtung wird es viel einfacher, seinen persönlichen Stuhl beizubehalten und nur die Armlehnen mit einem einfachen Griff nachzurüsten oder von einem anderen Stuhl auf den eigenen Stuhl zu übertragen.

Es ist leicht ersichtlich, daß an der Armlehne der mindestens eine Konus oder die mindestens eine sich konisch verengende Öffnung vorgesehen werden kann, solange am Stuhl das Gegenstück vorgesehen ist.

Vorzugsweise können der mindestens eine Konus und die sich konisch verengende Öffnung parallel zur Sitzfläche des Stuhls angeordnet sein. Insbesondere kann der mindestens eine Konus am Ende eines hakenförmigen Teils angeordnet sein. Dadurch wirkt die von oben auf die Armlehne ausgeübte Kraft nicht in Preßrichtung des mindestens einen Konus sondern auf die Seitenflächen des Konus und der sich konisch verengenden Öffnung. Besonders vorteilhaft ist es, wenn zwei hakenförmige Teile vorgesehen sind, die an ihren Enden konisch geformt sind und in eine sich konisch verengende Öffnung am jeweiligen anderen Haken eingreifen.

Durch die Verwendung mehrerer Konen und sich konisch verengender Öffnungen kann die Stabilität der Befestigungsvorrichtung erhöht werden. Der mindestens eine Konus kann auch in die mindestens eine sich konisch verengende Öffnung in unterschiedlichen Positionen einpreßbar sein, die einen unterschiedlichen Abstand der Armlehne von der Sitzfläche ergeben. Neben dem raschen Abnehmen und Austauschen der Armlehnen läßt sich hierdurch auch die Armlehnenposition auf Benutzer unterschiedlicher Größe anpassen. Dabei können diese unterschiedlichen Positionen beispielsweise durch Vorsprünge auf dem mindestens einen Konus, die in entsprechende Vertiefungen in der sich mindestens einen sich konisch verengenden Öffnung einführbar sind, festgelegt sein. Zur Erleichterung der Einstellung der Armlehnen können zudem auch Markierungen an der Befestigungsvorrichtung vorgesehen sein.

Da der Spannbügel nur in Verbindung mit der Armlehne benötigt wird, ist es vorteilhaft, wenn der Spannbügel an der Armlehne befestigt ist.

Die Armlehne kann auch zweistückig aus einer Armauflage und einem Adapterelement aufgebaut sein. In diesem Fall ist das Adapterelement, an das neben der Armauflage auch andere Elemente befestigbar sind, mit der Befestigungsvorrichtung am Stuhl zu befestigen.

Ein Ausführungsbeispiel ist in den Zeichnungen dargestellt und wird im Folgenden näher beschrieben.

Es zeigen:
- Fig. 1: eine perspektivische Teilansicht auf die Unterseite einer Sitzfläche eines Stuhles mit einer erfindungsgemäßen Befestigungsvorrichtung;
- Fig. 2: eine perspektivische Ansicht einer Armlehne mit einer Befestigungsvorrichtung nach der Erfindung;
- Fig. 3: einen Schnitt entlang der Linie III - III durch die Armlehne nach Fig. 2 im montierten Zustand.

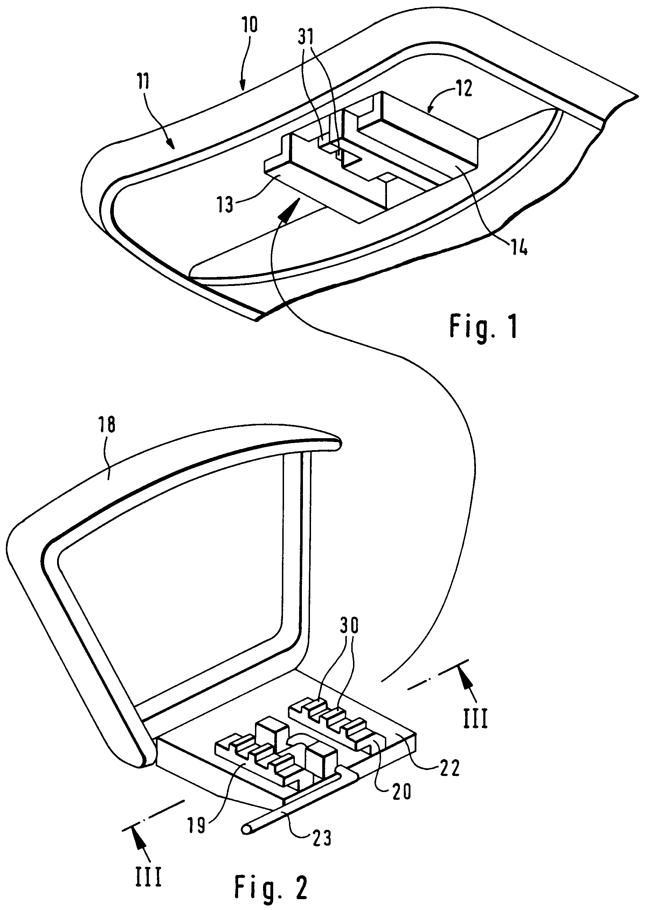

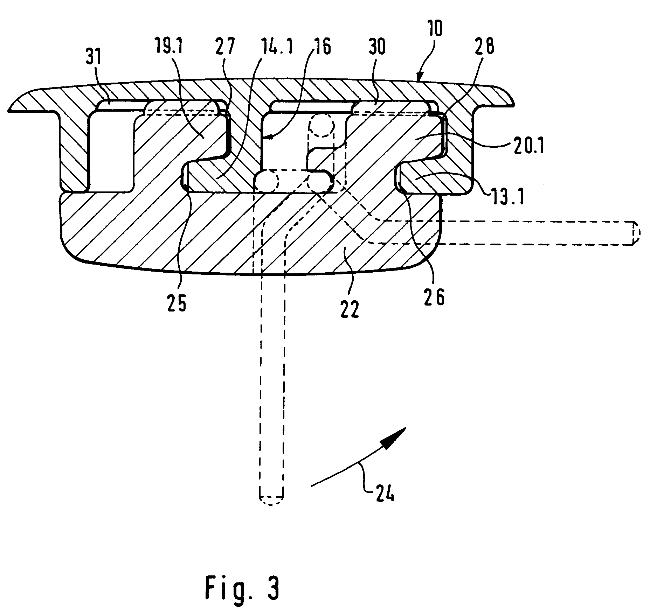

Fig. 1 zeigt die Unterseite einer Sitzfläche 10, in die in der Nähe des seitlichen Randes 11 ein Aufsatz 12 angeformt ist. Am Aufsatz 12 sind zwei durchgehende hakenförmige Elemente 13 und 14 parallel zueinander angeordnet. Auf der Innenseite des Aufsatzes 12 ist außerdem ein Anschlag 16 vorgesehen. Die hakenförmigen Elemente 13 und 14 dienen der Aufnahme von entsprechend geformten hakenförmigen Elementen 19 und 20, die an einer Befestigungsplatte 22 einer Armlehne 18 angeordnet sind, wie in Fig. 2 gezeigt ist. Die Armlehne 18 weist außerdem einen Spannbügel 23 auf, der in Richtung des Pfeiles 24 (Fig. 3) verschwenkbar ist und somit nach Einsetzen der Armlehne in den Aufsatz 12 der Sitzfläche 10 gegen den Anschlag 16 preßbar ist und dabei die hakenförmigen Elemente 19, 20 der Armlehne mit den hakenförmigen Elementen 13, 14 der Sitzfläche 10 verspannt. Auf der Oberseite der Haken 19, 20 der Armlehne 18 sind Vorsprünge 30 angeordnet, die in entsprechend geformte Vertiefungen 31 in der Sitzfläche 10 einführbar sind. Dabei gibt es, entsprechend der Anzahl der Vorsprünge 30, drei verschiedene Positionen, in denen die Vorsprünge 30 der Armlehne 18 in die Vertiefungen 31 einsetzbar sind. Je nach gewählter Position befindet sich die Armlehne 18 weiter entfernt oder dichter an der Sitzfläche 10.

Aus der Schnittdarstellung nach Fig. 3, die die Verbindungsstelle zwischen der Armlehne 18 und der Sitzfläche 10 bei montierter Armlehne 18 zeigt, ist ersichtlich, daß die hakenförmigen Elemente 19 und 20 der Armlehne 18 konusförmige Endstücke 19.1 und 20.1 aufweisen, die eine sich konisch verengende Öffnung 25 und 26 zur Aufnahme der ebenfalls konischen Endstücke 13.1 der hakenförmigen Elemente 13 und 14 der Sitzfläche 10 bilden. Umgekehrt bilden auch die hakenförmigen Elemente 13 und 14 der Sitzfläche 10 sich konisch verengende Öffnungen 27, 28 für die hakenförmigen Elemente 19 und 20 der Armlehne. Durch Drehen des Spannbügels 23 in Pfeilrichtung 24 wird dessen Endstück 23.1 gegen den Anschlag 16 gedrückt, wodurch die konusförmigen Endstücke 13.1 und 14.1 der hakenförmigen Elemente 13 und 14 der Sitzfläche 10 in die sich konisch verengenden Öffnungen 25 und 26 unterhalb der konischen Endstücke 19.1 und 20.1 der hakenförmigen Elemente 19 und 20 an der Armlehne 18 eingepreßt werden. Durch Lösen des Spannhebels 23 aus der schlitzförmigen Ausnehmung 17 durch Drehung in Gegenrichtung des Pfeiles 24 läßt sich die Verbindung zwischen Armlehne und Stuhl rasch wieder lösen. Damit gewährleistet die gezeigte Befestigungsvorrichtung sowohl eine rasche Montage als auch Demontage einer Armlehne an einem Stuhl.

## Patentansprüche

1. Befestigungsvorrichtung für eine Armlehne an einem Stuhl, insbesondere einem Arbeitsstuhl, dadurch gekennzeichnet, daß Armlehne (18) und Stuhl über mindestens einen Konus (13.1, 14.1, 19.1, 20.1) und mindestens eine sich konisch verengende Öffnung (25, 26) miteinander verbindbar sind, indem mit einem Spannbügel (23) der mindestens eine Konus (13.1, 14.1, 19.1, 20.1) in die mindestens eine sich konisch verengende Öffnung (25, 26, 27, 28) eingepreßt wird.

2. Befestigungsvorrichtung nach Anspruch 1, dadurch gekennzeichnet, daß der mindestens eine Konus (19.1, 20.1) an der Armlehne (18) und die mindestens eine sich konisch verengende Öffnung (27, 28) am Stuhl angeordnet sind.

3. Befestigungsvorrichtung nach Anspruch 1, dadurch gekennzeichnet, daß die mindestens eine sich konisch verengende Öffnung (25, 26) an der Armlehne (18) und der mindestens eine Konus (13.1, 14.1) am Stuhl angeordnet sind.

4. Befestigungsvorrichtung nach einem der Ansprüche 1 bis 3, dadurch gekennzeichnet, daß der mindestens eine Konus (13.1, 14.1, 19.1, 20.1) und die mindestens eine sich konisch verengende Öffnung (25, 26, 27, 28) parallel zur Sitzfläche (10) des Stuhles angeordnet sind.

5. Befestigungsvorrichtung nach einem der Ansprüche 1 bis 4, dadurch gekennzeichnet, daß der mindestens eine Konus (13.1, 14.1, 19.1, 20.1) das Endstück eines hakenförmigen Teiles (13, 14, 19, 20) bildet.

6. Befestigungsvorrichtung nach Anspruch 5, dadurch gekennzeichnet, daß mindestens zwei hakenförmige Teile (13, 14; 19, 20) vorgesehen sind, die an ihren Enden konisch geformt sind und in eine sich konisch verengende Öffnung (25, 26, 27, 28) am jeweiligen anderen Haken (13, 14; 19, 20) eingreifen.

7. Befestigungsvorrichtung nach einem der Ansprüche 1 bis 6, dadurch gekennzeichnet, daß der mindestens eine Konus (13.1, 14.1, 19.1, 20.1) in die mindestens eine sich konisch verengende Öffnung (25, 26) in unterschiedlichen Positionen einpreßbar ist, die einen unterschiedlichen Abstand der Armlehne (18) von der Sitzfläche (10) des Stuhles ergeben.

8. Befestigungsvorrichtung nach Anspruch 7, dadurch gekennzeichnet, daß die unterschiedlichen Positionen durch Vorsprünge (30) auf dem mindestens einen Konus (19, 20), die in entsprechende Vertiefungen (31) in der mindestens einen sich konisch verengenden Öffnung (27, 28) einführbar sind, festgelegt sind.

9. Befestigungsvorrichtung nach einem der Ansprüche 1 bis 8, dadurch gekennzeichnet, daß der Spannbügel (23) an der Armlehne (18) befestigt ist.

10. Befestigungsvorrichtung nach einem der Ansprüche 1 bis 9, dadurch gekennzeichnet, daß bei zweiteiliger Ausbildung der Armlehne (18) aus einem an einem Stuhl befestigbaren Adapterelement und einer Armauflage das Adapterelement mit der Befestigungsvorrichtung am Stuhl befestigbar ist.
